# EUROPEAN PATENT SPECIFICATION

(11) **EP 4 403 409 B1**
(45) Date of publication and mention of the grant of the patent: **17.12.2025**
(21) Application number: 22869728.0
(22) Date of filing: 10.08.2022
(51) Int. Cl.: B60L 58/27, B60L 3/00, B60L 58/12, H01M 10/48, H01M 10/615, H01M 10/625, H01M 10/633, H01M 10/6571, B60L 58/16, B60L 1/02, H01M 10/63, B60L 58/25

(54) **CONTROL SYSTEM**
STEUERSYSTEM
SYSTÈME DE COMMANDE

(30) Priority: 17.09.2021 JP 2021152292
(43) Date of publication of application: 24.07.2024
(73) Proprietor: KABUSHIKI KAISHA TOYOTA JIDOSHOKKI, Kariya-shi, Aichi 448-8671 (JP)
(72) Inventor: KOIE Ryosuke, Kariya-shi, Aichi 448-8671 (JP)
(74) Representative: TBK
(86) International application number: PCT/JP2022/030542
(87) International publication number: WO 2023/042581

(56) References cited:
- EP-A1- 3 354 499
- JP-A- 2005 176 484
- JP-A- 2013 018 419
- JP-A- 2015 168 345
- JP-A- 2019 221 025
- JP-A- 2020 119 694
- JP-A- 2020 137 380
- JP-A- 2020 137 380
- JP-A- 2021 126 037
- JP-A- 2021 126 037
- JP-B2- 3 749 184
- US-A1- 2007 212 598
- US-A1- 2019 039 477
- US-B2- 10 358 047

## Description

### Technical Field

The present invention relates to a system and a method for controlling a battery mounted on a vehicle.

### Background Art

In recent years, an electric vehicle that drives a motor with power supplied from a battery has been widely used. For example, electrification of industrial vehicles such as forklift trucks has been advanced.

A battery generally preferably operates in a predetermined temperature range. For this reason, a power storage system having a temperature control function is known. Meanwhile, in the electric vehicle, it is required to increase a cruisable distance. For this reason, a method of limiting the opportunity to adjust the temperature of the battery based on a battery deterioration index (charge rate, temperature, or the like) has been proposed (for example, JP 2020-119694 A). As an example, even in a case where the temperature of the battery is out of the predetermined temperature region, the temperature adjustment is not executed when the charge rate enters a dangerous region. Then, since the power consumption is suppressed, the cruising distance of the electric vehicle becomes long.

Furthermore, US 10 358 047 B2 discloses an electric power storage system, wherein a first electric power is supplied to a battery heater when a state of charge of the battery is larger than a predetermined value and the temperature of the battery is equal to or lower than the predetermined temperature, and a second electric power is supplied to the battery heater when the state of charge of the battery is equal to or smaller than the predetermined value and the temperature of the battery is equal to or lower than the predetermined temperature. Still further, EP 3 354 499 A1 refers to a device for heating a traction battery of a vehicle, wherein a control unit controls an electric energy supply according to at least one environmental parameter, at least one parameter of the traction battery and/or at least one parameter of the rechargeable battery. Further prior art is known from JP 2020 137380 A, US 2019/039477 A1 and US 2007/212598 A1.

### Summary of Invention

### Technical Problem

As described above, a method of increasing the cruisable distance by limiting the opportunity to adjust the temperature of the battery based on the battery deterioration index in the electric vehicle has been proposed. However, this method may increase an internal resistance of the battery because the opportunity to adjust the temperature of the battery is limited. When the internal resistance of the battery increases, the battery voltage may decrease when power is supplied from the battery to the load.

An object of the present invention is to avoid a decrease in battery voltage while suppressing a decrease in temperature of a battery mounted on a vehicle.

### Solution to Problem

According to the invention, the above object is achieved by a control system according to claim 1 and a vehicle according to claim 3. Further features and advantageous modifications are shown in the dependent claims.

According to one aspect of the present invention, there is provided a control system including: a temperature sensor that detects a temperature of a battery mounted on a vehicle; a heater that heats the battery; a battery control unit that detects a charge state of the battery and controls an operating state of the heater; and a control unit that controls a drive device that operates with power supplied from the battery and gives an instruction related to the operating state of the heater to the battery control unit. When the temperature of the battery is lower than a predetermined temperature threshold and the charge state of the battery is higher than a predetermined charge level, the control unit is configured to give a heat generation instruction to cause the heater to generate heat to the battery control unit without limiting the target rotation speed of a motor that is included in the drive device. When the temperature of the battery is lower than the temperature threshold and the charge state of the battery is equal to or lower than the first charge level and higher than a second charge level, which is lower than the first charge level, the control unit is configured to limit power consumption of the drive device while giving the heating instruction to the battery control unit. When the temperature of the battery is lower than the temperature threshold and the charge state of the battery is lower than or equal to the second charge level, the control unit is configured to give a stop instruction to cause the heater to be stopped or a suppression instruction to cause an amount of heat generated by the heater (22) to be suppressed to the battery control unit (23) while limiting the target rotation speed of the motor.

As described above, in the control system according to the embodiment of the present invention, when the temperature of the battery is lower than the temperature threshold, the temperature of the battery is increased by causing the heater to generate heat. However, even when the temperature of the battery is lower than the temperature threshold, the heater is stopped and the power consumption of the drive device is limited when the charge state of the battery is equal to or lower than the predetermined charge level (for example, a predetermined SOC threshold). As a result, since the current supplied from the battery to the drive device is suppressed, even when the internal resistance of the battery increases, voltage drop does not increase, and a lowering range of the battery voltage can be suppressed.

In the above configuration, when the temperature of the battery is lower than the temperature threshold and the charge state of the battery is equal to or lower than the charge level, the control unit may more strongly limit power consumption of the drive device as a difference between the temperature of the battery and the temperature threshold is larger. In addition, in a case where the drive device includes a motor mounted on the vehicle, the control unit may limit power consumption of the drive device by limiting a rotation speed of the motor.

### Advantageous Effects of Invention

According to the present invention, it is possible to avoid a decrease in a battery voltage while suppressing a decrease in temperature of a battery mounted on a vehicle.

### Brief Description of Drawings

Fig. 1 is a diagram illustrating an example of a control system mounted on a vehicle according to an embodiment of the present invention.
Fig. 2 is a flowchart illustrating an example of processing of a battery control unit.
Fig. 3 is a flowchart illustrating an example of processing of a control unit.
Fig. 4 is a flowchart illustrating an embodiments of the invention of the processing of the control unit.

### Description of Embodiments

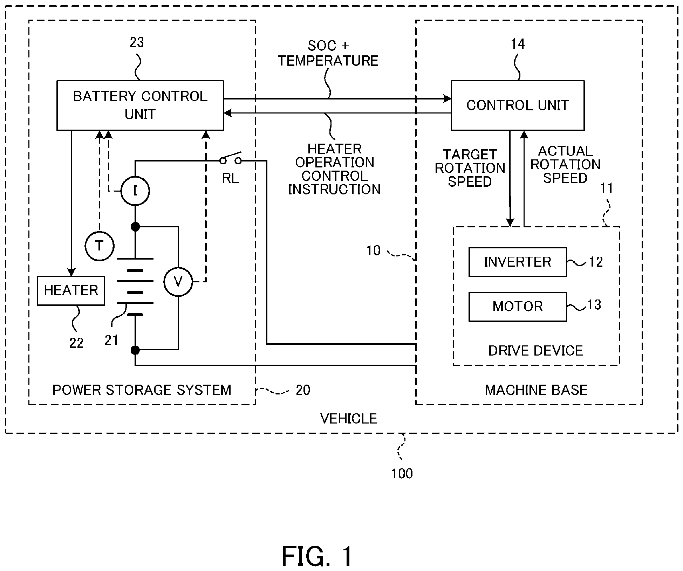

Fig. 1 illustrates an example of a control system mounted on a vehicle according to an embodiment of the present invention. A vehicle 100 according to the embodiment of the present invention is not particularly limited, but is, for example, an electric vehicle that travels by a motor. However, the vehicle 100 is not limited to an electric vehicle, and may be a hybrid vehicle or the like. The vehicle 100 is not particularly limited, but is, for example, an industrial vehicle such as a forklift. However, the vehicle 100 is not limited to an industrial vehicle, and may be a passenger car or the like.

The vehicle 100 includes a machine base 10 and a power storage system 20. Note that Fig. 1 mainly depicts a control system according to an embodiment of the present invention, and the vehicle 100 may implement other devices and functions.

The machine base 10 includes a drive device 11 and a control unit 14. The drive device 11 includes an inverter 12 and a motor 13. The inverter 12 rotates the motor 13 using the power supplied from the power storage system 20. In this case, the inverter 12 rotates the motor 13 in accordance with a drive control signal provided from the control unit 14. In this example, the drive control signal includes a control signal indicating a target rotation speed. In this case, the inverter 12 controls the rotation speed of the motor 13 according to the target rotation speed. The motor 13 is, for example, a motor for traveling of the vehicle 100. Alternatively, when the vehicle 100 is a forklift, the motor 13 may be a cargo handling motor of the forklift. The drive device 11 may detect an actual rotation speed of the motor 13. In this case, an actual rotation speed representing the actual rotation speed of the motor 13 is notified to the control unit 14.

The control unit 14 is realized by, for example, a microcomputer including a processor and a memory, and controls the drive device 11 according to an instruction from a user of the vehicle 100. The instruction from the user corresponds to, for example, a depression angle (alternatively, the accelerator opening degree) of an accelerator of the vehicle 100. In this case, the control unit 14 calculates the target rotation speed of the motor 13 according to an instruction from the user. Alternatively, the control unit 14 may calculate the target rotation speed based on an instruction from the user and the actual rotation speed notified from the drive device 11.

As will be described in detail later, the control unit 14 may limit power supply to the drive device 11 based on the temperature and the charge state of the battery 21 notified from the power storage system 20. The control unit 14 can control an operating state of a heater 22 included in the power storage system 20.

The power storage system 20 includes the battery 21, the heater 22, a voltage sensor V, a current sensor I, a temperature sensor T, a relay RL, and a battery control unit 23. Note that the power storage system 20 may include other circuits or devices not shown in Fig. 1.

The battery 21 is not particularly limited, but is a lithium-ion battery in this embodiment. The battery 21 is not particularly limited, but includes a plurality of battery packs connected in series/parallel. In this case, each battery pack may include a plurality of battery cells connected in series.

The heater 22 is provided in the vicinity of the battery 21 and generates heat in accordance with an instruction from the battery control unit 23. That is, the heater 22 can heat the battery 21 in accordance with an instruction from the battery control unit 23. The heater 22 is realized by, for example, a resistance wire. In this case, the heater 22 generates heat by passing a current through the resistance wire. In addition, the battery control unit 23 controls an on state/off state of the heater 22 by controlling the current flowing through the resistance wire.

The voltage sensor V detects a voltage of the battery 21. The voltage sensor V may detect a voltage between a positive electrode terminal and a negative electrode terminal of the battery 21, may detect a voltage of each battery pack, or may detect a voltage of each battery cell. The current sensor I detects a current flowing through the battery 21. The current sensor I can detect a charging current when the battery 21 is charged, a current supplied from the battery 21 to a load, and a current regenerated from the load to the battery 21. The temperature sensor T is provided in the vicinity of the battery 21 and detects the temperature of the battery 21. The relay RL conducts/cuts off a power line connected to the battery 21 according to an instruction from the battery control unit 23. For example, in a case where the battery 21 is a lithium-ion battery, when the battery voltage falls below a predetermined threshold, the relay RL may cut off the power line to protect the battery 21.

The battery control unit 23 is realized by, for example, a microcomputer including a processor and a memory, and controls a charging operation of the battery 21. In this case, the battery control unit 23 may control the charging current and the charging voltage of the battery 21 while exchanging a control signal with a charger (not illustrated). In addition, the battery control unit 23 detects a charge state of the battery 21. As the charge state, for example, a State of Charge (SOC) of the battery 21 is calculated. The SOC is an index representing a charge rate, and 100% and 0% represent a fully charged state and a fully discharged state, respectively.

The SOC can be calculated or estimated by a known technique. For example, the battery control unit 23 can calculate the SOC based on the integrated value of the current detected by the current sensor I. However, when the SOC is calculated by this method, an error may be accumulated. Therefore, when the SOC is calculated based on the integrated value of the current, it is preferable to reset the SOC according to a predetermined trigger. For example, the SOC may be reset to "100%" when the battery 21 can be regarded as a fully charged state, or the SOC may be reset to "0%" when the battery 21 can be regarded as a fully discharged state. In addition, the battery control unit 23 may estimate the SOC by another method. For example, the battery control unit 23 may estimate the SOC based on the voltage of the battery 21.

The battery control unit 23 notifies the control unit 14 of the SOC of the battery 21. In this case, the battery control unit 23 also notifies the control unit 14 of the temperature of the battery 21 detected by the temperature sensor T. For example, the battery control unit 23 preferably notifies the control unit 14 of the SOC and the temperature of the battery 21 at predetermined time intervals. Alternatively, the battery control unit 23 may notify the control unit 14 of the SOC and the temperature of the battery 21 in response to a request from the control unit 14.

Furthermore, the battery control unit 23 can adjust the temperature of the battery 21 by controlling the heater 22. Here, in general, the battery preferably operates in a predetermined temperature range. For example, in a case where the battery 21 is a lithium-ion battery, the internal resistance (alternatively, battery resistance) of the battery 21 increases at a low temperature. Here, when the internal resistance increases, the voltage of the battery 21 may decrease when power is supplied from the battery 21 to the load. Alternatively, charging efficiency of the battery 21 may decrease.

Therefore, the battery control unit 23 notifies the control unit 14 of the temperature of the battery 21 measured using the temperature sensor T. Then, the control unit 14 determines whether to cause the heater 22 to generate heat based on the temperature of the battery 21. Specifically, when the temperature of the battery 21 becomes lower than a predetermined temperature threshold, the control unit 14 determines that the heater 22 needs to generate heat. In this case, the battery control unit 23 raises the temperature of the battery 21 by causing the heater 22 to generate heat in accordance with an instruction from the control unit 14. However, as will be described in detail later, the control unit 14 may stop or suppress temperature adjustment performance of the heater 22 even when the temperature of the battery 21 is lower than a predetermined temperature threshold.

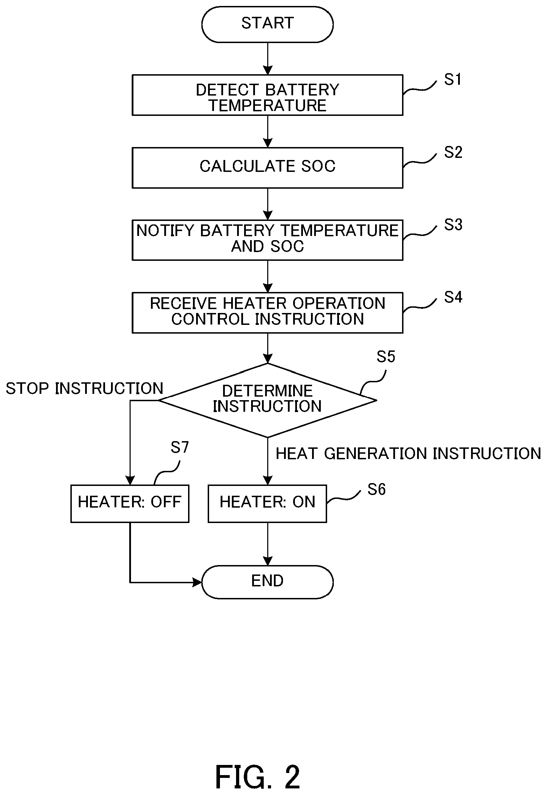

Fig. 2 is a flowchart illustrating an example of processing of the battery control unit 23. Note that this flowchart represents a procedure related to temperature adjustment of the battery 21, and other procedures are omitted. Furthermore, the processing of this flowchart is repeatedly executed at predetermined time intervals, for example.

In S1, the battery control unit 23 detects the temperature of the battery 21 using the output signal of the temperature sensor T. In the following description, the temperature of the battery 21 may be referred to as a "battery temperature". In S2, the battery control unit 23 calculates the SOC of the battery 21. In S3, the battery control unit 23 notifies the control unit 14 of the battery temperature detected in S1 and the SOC calculated in S2.

In S4 to S5, the battery control unit 23 receives the heater operation control instruction from the control unit 14. The heater operation control instruction represents a heat generation instruction or a stop instruction in this embodiment. The heater operation control instruction will be described later. When the heat generation instruction is received, the battery control unit 23 causes the heater 22 to generate heat in S6. As a result, the temperature of the battery 21 increases. Meanwhile, when the stop instruction is received, the battery control unit 23 stops the heat generation of the heater 22 in S7.

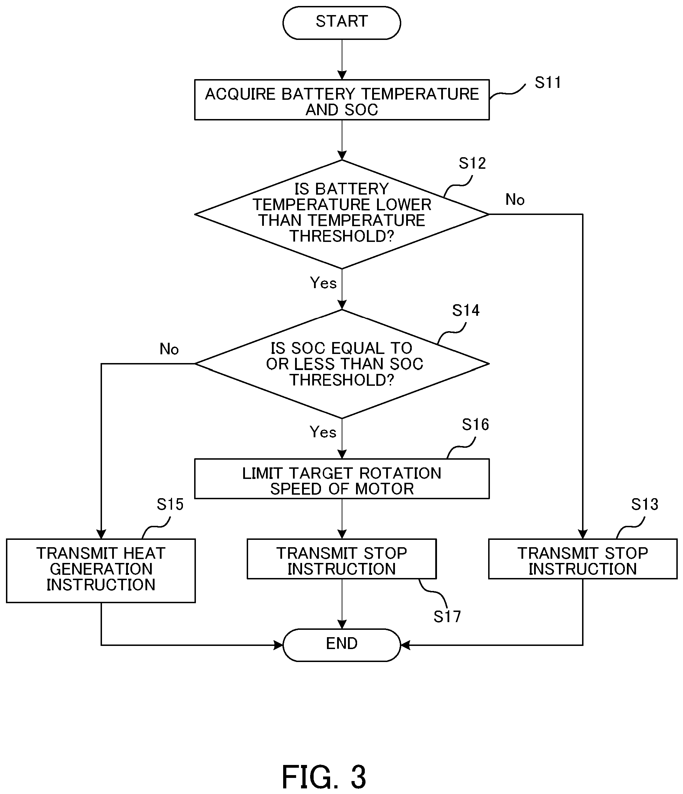

Fig. 3 is a flowchart illustrating an example of processing of the control unit 14. Note that this flowchart represents a procedure related to temperature adjustment of the battery 21, and other procedures are omitted. Furthermore, the processing of this flowchart is repeatedly executed at predetermined time intervals, for example.

In S11, the control unit 14 acquires information indicating the temperature of the battery 21 and information indicating the SOC from the battery control unit 23. In S12, the control unit 14 compares the battery temperature with a predetermined temperature threshold. The temperature threshold may be determined, for example, in consideration of the amount of increase in the internal resistance of the battery 21 based on the normal temperature. In this embodiment, the temperature threshold is not particularly limited, but is, for example, "5°C". When the battery temperature is equal to or higher than the temperature threshold, the control unit 14 generates a stop instruction indicating that the heater 22 is stopped as the heater operation control instruction in S13, and transmits the stop instruction to the battery control unit 23.

When the battery temperature is lower than the temperature threshold, the control unit 14 compares the SOC of the battery 21 with a predetermined SOC threshold (predetermined charge level) in S14. The SOC threshold may be determined, for example, in consideration of a distance that the vehicle 100 can travel using the power of the battery 21. For example, when the vehicle 100 is an industrial vehicle used in a factory, the SOC threshold may be a charge amount with which the industrial vehicle can travel from an arbitrary position in the factory to a charging station. The SOC threshold is not particularly limited, but is, for example, "15%". When the SOC of the battery 21 is higher than the SOC threshold, the control unit 14 generates a heat generation instruction representing causing the heater 22 to generate heat as a heater operation control instruction in S15, and transmits the heat generation instruction to the battery control unit 23.

When the battery temperature is lower than the temperature threshold and the SOC of the battery 21 is equal to or lower than the SOC threshold, the control unit 14 limits the power consumption of the drive device 11 in S16. In this embodiment, the control unit 14 limits the power consumption of the drive device 11 by limiting the target rotation speed of the motor 13. For example, the control unit 14 sets the maximum value of the target rotation speed of the motor 13 to be smaller than that at the normal time. In addition, it is preferable that the control unit 14 more strongly limit the power consumption of the drive device 11 as the difference between the battery temperature and the temperature threshold is larger. In this case, the power consumption of the drive device 11 is limited in stages. For example, when the difference between the battery temperature and the temperature threshold is 2°C or less, the maximum value of the target rotation speed of the motor 13 is limited to 80% of the normal time, and when the difference exceeds 2°C, the maximum value of the target rotation speed of the motor 13 is limited to 50% of the normal time. Alternatively, the limit width of the maximum value of the target rotation speed of the motor 13 may be proportional to the difference between the battery temperature and the temperature threshold. Thereafter, in S17, the control unit 14 generates the above-described stop instruction as a heater operation control instruction and transmits the stop instruction to the battery control unit 23.

As described with reference to Fig. 2, the battery control unit 23 controls the operating state of the heater 22 according to the heater operation control instruction. Therefore, when the heat generation instruction is generated in S15, the battery control unit 23 causes the heater 22 to generate heat. Meanwhile, when the stop instruction is generated in S13 or S17, the battery control unit 23 stops the heater 22.

As described above, in the control system according to the embodiment of the present invention, when the battery temperature is lower than the temperature threshold, the battery temperature is increased by causing the heater 22 to generate heat. As a result, an increase in the internal resistance of the battery 21 is suppressed, and a decrease in the battery voltage can be avoided. However, even when the battery temperature is lower than the temperature threshold, the heater 22 is stopped when the SOC of the battery 21 is lower than the SOC threshold. As a result, battery consumption is suppressed, and a driving time of the battery is lengthened. However, when the heater 22 is stopped, the temperature of the battery 21 remains low, and the battery voltage may decrease due to an increase in the internal resistance of the battery 21. Therefore, the control unit 14 stops the heater 22 and limits the power consumption of the drive device 11. As a result, since the current supplied from the battery 21 to the load (that is, the drive device 11) of the machine base 10 is suppressed, even when the internal resistance of the battery 21 increases, the voltage drop does not increase, and the lowering range of the battery voltage can be suppressed. In other words, an operation area (the temperature and/or the SOC of the battery 21) where the battery voltage does not decrease is wider than the case where the power consumption of the drive device 11 is not limited.

### <Embodiment of the invention>

In the procedure illustrated in Fig. 3, the heater control and the motor control are performed based on the comparison between the SOC of the battery 21 and one SOC threshold, but the present invention is not limited to this method. That is, the heater control and the motor control may be performed using two different thresholds.

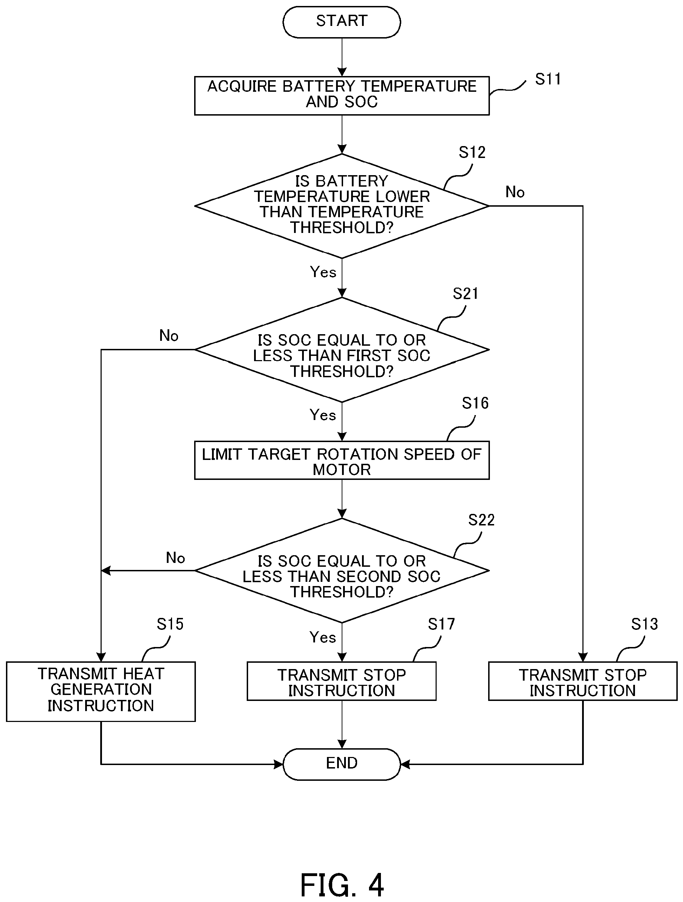

Fig. 4 is a flowchart illustrating an embodiment of the invention of processing of the control unit 14. Note that S11 to S13 and S15 to S17 are substantially the same in Figs. 3 and 4. That is, when the battery temperature is equal to or higher than the temperature threshold, the stop instruction is transmitted to the battery control unit 23 in S13. Meanwhile, when the battery temperature is lower than the temperature threshold, the processing of the control unit 14 proceeds to S21.

In S21, the control unit 14 compares the SOC of the battery 21 with the first SOC threshold (first charge level). The first SOC threshold is not particularly limited, but may be the same as the SOC threshold used in the procedure illustrated in Fig. 3. When the SOC of the battery 21 is higher than the first SOC threshold, the control unit 14 transmits a heat generation instruction to the battery control unit 23 in S15. Meanwhile, when the SOC of the battery 21 is equal to or lower than the first SOC threshold, the control unit 14 limits the power consumption of the drive device 11 in S16. For example, the control unit 14 sets the maximum value of the target rotation speed of the motor 13 to be smaller than that at the normal time.

In S22, the control unit 14 compares the SOC of the battery 21 with the second SOC threshold (second charge level). The second SOC threshold is assumed to be lower than the first SOC threshold in this embodiment. When the SOC of the battery 21 is higher than the second SOC threshold, the control unit 14 transmits a heat generation instruction to the battery control unit 23 in S15. Meanwhile, when the SOC of the battery 21 is equal to or lower than the second SOC threshold, the control unit 14 transmits a stop instruction to the battery control unit 23 in S17.

As described above, in the procedure illustrated in Fig. 4, when the battery temperature is lower than the temperature threshold and the SOC of the battery 21 is lower than the first SOC threshold and higher than the second threshold, the control unit 14 limits the target rotation speed of the motor 13, but the heater 22 generates heat. When the SOC of the battery 21 falls below the second threshold, the control unit 14 limits the target rotation speed of the motor 13 and stops the heater 22. That is, while the SOC of the battery 21 decreases, the power consumption of the motor 13 is first limited, and then the heat generation of the heater 22 is limited. According to this procedure, the period during which the battery 21 is used in the low temperature state is shortened as compared with the procedure illustrated in Fig. 3. However, the variation of the embodiment of the present invention is not limited to this procedure, and the heat generation of the heater 22 may be limited first, and then the power consumption of the motor 13 may be limited.

The two SOC thresholds are preferably determined in consideration of a trade-off relationship between battery deterioration and an operating time of the vehicle 100. When the two SOC thresholds are the same, the procedure illustrated in Fig. 4 is the same as the procedure illustrated in Fig. 3.

### <Other Variations>

The battery 21 is not limited to a lithium-ion battery, and may be a battery using other materials. For example, the present invention is effective for a battery that needs to be protected when a battery voltage drops. Further, the SOC threshold may be arbitrarily set by the user of the vehicle 100 using an interface mounted on the machine base 10.

In the above-described embodiment, the SOC is used as the charge state of the battery 21, but the present invention is not limited to this method. For example, the control unit 14 may control the operations of the heater 22 and the motor 13 based on the voltage of the battery 21, the voltage of the battery pack, or the voltage of the battery cell, instead of the SOC.

In the above-described embodiment, the heater 22 is controlled to the ON state or the OFF state, but the present invention is not limited to this method. For example, the control unit 14 may control the temperature adjustment performance of the heater 22 according to the temperature of the battery 21. In this case, the control unit 14 gives a suppression instruction indicating suppression of the amount of heat generated by the heater 22 to the battery control unit 23. Then, the battery control unit 23 adjusts the current flowing to the heater 22 based on the suppression instruction.

In the above-described embodiment, the power consumption of the drive device 11 is limited by limiting the target rotation speed of the motor 13, but the present invention is not limited to this method. For example, when the battery temperature is lower than the temperature threshold and the SOC of the battery 21 is equal to or lower than the SOC threshold, the control unit 14 may limit the accelerator opening degree of the vehicle 100, or may change the correspondence relationship between the accelerator opening degree and the target rotation speed of the motor 13.

In the above-described embodiment, the control unit 14 determines the operating state of the heater 22, and the battery control unit 23 controls the heater 22 according to the instruction given from the control unit 14, but the present invention is not limited to this method. For example, the battery control unit 23 may control the operating state of the heater 22 based on the battery temperature, and when the SOC of the battery 21 is lower than the SOC threshold, the control unit 14 may give the stop instruction to the battery control unit 23. In this case, even when the battery temperature is equal to or lower than the temperature threshold, the battery control unit 23 stops the heater 22 when a stop instruction is given.

### Reference Signs List

- 10: machine base
- 11: drive device
- 12: inverter
- 13: motor
- 14: control unit
- 20: power storage system
- 21: battery
- 22: heater
- 23: battery control unit
- 100: vehicle

## Claims

1. A control system comprising:
a temperature sensor (T) configured to detect a temperature of a battery (21) mounted on a vehicle (100);
a heater (22) configured to heat the battery (21);
a battery control unit (23) configured to detect a charge state of the battery (21) and control an operating state of the heater (22); and
a control unit (14) configured to control a drive device (11) that operates with power supplied from the battery (21) and gives an instruction related to the operating state of the heater (22) to the battery control unit (23),
**characterized in that**
when the temperature of the battery (21) is lower than a predetermined temperature threshold and the charge state of the battery (21) is higher than a first charge level, the control unit (14) is configured to give a heat generation instruction to cause the heater (22) to generate heat to the battery control unit (23) without limiting the target rotation speed of a motor (13) that is included in the drive device (11),
when the temperature of the battery (21) is lower than the temperature threshold and the charge state of the battery (21) is equal to or lower than the first charge level and higher than a second charge level, which is lower than the first charge level, the control unit (14) is configured to limit power consumption of the drive device (11) while giving the heating instruction to the battery control unit (23), and
when the temperature of the battery (21) is lower than the temperature threshold and the charge state of the battery (21) is lower than or equal to the second charge level, the control unit (14) is configured to give a stop instruction to cause the heater (22) to be stopped or a suppression instruction to cause an amount of heat generated by the heater (22) to be suppressed to the battery control unit (23) while limiting the target rotation speed of the motor (13).

2. The control system according to claim 1, wherein
when the temperature of the battery (21) is lower than the temperature threshold and the charge state of the battery (21) is equal to or lower than the first charge level, the control unit (14) is configured to more strongly limit power consumption of the drive device (11) as a difference between the temperature of the battery (21) and the temperature threshold is larger.

3. A vehicle comprising:
a battery (21);
a drive device (11) that operates with power supplied from the battery (21); and
the control system according to claims 1 or 2.

## Patentansprüche

1. Steuersystem mit:
einem Temperatursensor (T), der konfiguriert ist, um eine Temperatur einer an einem Fahrzeug (100) angebrachten Batterie (21) zu erfassen;
einer Heizvorrichtung (22), die konfiguriert ist, um die Batterie (21) zu erwärmen;
einer Batteriesteuereinheit (23), die konfiguriert ist, um einen Ladezustand der Batterie (21) zu erfassen und einen Betriebszustand der Heizvorrichtung (22) zu steuern; und
einer Steuereinheit (14), die konfiguriert ist, um eine Antriebsvorrichtung (11) zu steuern, die mit von der Batterie (21) gelieferter Energie betrieben wird, und der Batteriesteuereinheit (23) eine Anweisung in Bezug auf den Betriebszustand der Heizvorrichtung (22) erteilt,
**dadurch gekennzeichnet, dass**,
wenn die Temperatur der Batterie (21) unter einem vorbestimmten Temperaturschwellenwert liegt und der Ladezustand der Batterie (21) über einem ersten Ladeniveau liegt, die Steuereinheit (14) konfiguriert ist, um einen Wärmeentwicklungsbefehl an die Batteriesteuereinheit (23) zu geben, um die Heizvorrichtung (22) zur Wärmeerzeugung anzuregen, ohne die Zieldrehzahl eines Motors (13) zu begrenzen, der in der Antriebsvorrichtung (11) enthalten ist,
wenn die Temperatur der Batterie (21) unter dem Temperaturschwellenwert liegt und der Ladezustand der Batterie (21) gleich oder unter dem ersten Ladeniveau und höher als ein zweites Ladeniveau ist, das unter dem ersten Ladeniveau ist, die Steuereinheit (14) konfiguriert ist, um den Stromverbrauch der Antriebsvorrichtung (11) zu begrenzen, während sie den Heizbefehl an die Batteriesteuereinheit (23) gibt, und,
wenn die Temperatur der Batterie (21) unter dem Temperaturschwellenwert liegt und der Ladezustand der Batterie (21) unter oder gleich dem zweiten Ladeniveau ist, die Steuereinheit (14) konfiguriert ist, um einen Stoppbefehl zum Stoppen der Heizvorrichtung (22) oder einen Unterdrückungsbefehl zum Unterdrücken einer von der Heizvorrichtung (22) erzeugten Wärmemenge an die Batteriesteuereinheit (23) auszugeben, während sie die Soll-Drehzahl des Motors (13) begrenzt.

2. Steuersystem nach Anspruch 1, wobei,
wenn die Temperatur der Batterie (21) unter dem Temperaturschwellenwert ist und der Ladezustand der Batterie (21) gleich oder unter dem ersten Ladeniveau ist, die Steuereinheit (14) konfiguriert ist, um den Stromverbrauch der Antriebsvorrichtung (11) umso stärker zu begrenzen, je größer die Differenz zwischen der Temperatur der Batterie (21) und dem Temperaturschwellenwert ist.

3. Fahrzeug mit:
einer Batterie (21);
einer Antriebsvorrichtung (11), die mit von der Batterie (21) gelieferter Energie betrieben wird; und
dem Steuersystem gemäß Anspruch 1 oder 2.

## Revendications

1. Système de commande comprenant :
un capteur de température (T) configuré pour détecter une température d'une batterie (21) montée sur un véhicule (100) ;
un dispositif de chauffage (22) configuré pour chauffer la batterie (21) ;
une unité de commande de batterie (23) configurée pour détecter un état de charge de la batterie (21) et commander un état de fonctionnement du dispositif de chauffage (22) ; et
une unité de commande (14) configurée pour commander un dispositif d'entraînement (11) qui fonctionne avec de l'énergie fournie par la batterie (21) et donne une instruction relative à l'état de fonctionnement du dispositif de chauffage (22) à l'unité de commande de batterie (23),
**caractérisé en ce que**,
lorsque la température de la batterie (21) est inférieure à un seuil de température prédéterminé et que l'état de charge de la batterie (21) est supérieur à un premier niveau de charge, l'unité de commande (14) est configurée pour donner une instruction de génération de chaleur, afin d'amener le dispositif de chauffage (22) à générer de la chaleur, à l'unité de commande de batterie (23) sans limiter la vitesse de rotation cible d'un moteur (13) qui est inclus dans le dispositif d'entraînement (11),
lorsque la température de la batterie (21) est inférieure au seuil de température et que l'état de charge de la batterie (21) est égal ou inférieur au premier niveau de charge et supérieur à un deuxième niveau de charge, qui est inférieur au premier niveau de charge, l'unité de commande (14) est configurée pour limiter la consommation d'énergie du dispositif d'entraînement (11) tout en donnant l'instruction de chauffage à l'unité de commande de batterie (23), et
lorsque la température de la batterie (21) est inférieure au seuil de température et que l'état de charge de la batterie (21) est inférieur ou égal au deuxième niveau de charge, l'unité de commande (14) est configurée pour donner une instruction d'arrêt afin d'arrêter le dispositif de chauffage (22) ou une instruction de suppression afin de supprimer une quantité de chaleur générée par le dispositif de chauffage (22) à l'unité de commande de batterie (23) tout en limitant la vitesse de rotation cible du moteur (13).

2. Le système de commande selon la revendication 1, dans lequel,
lorsque la température de la batterie (21) est inférieure au seuil de température et que l'état de charge de la batterie (21) est égal ou inférieur au premier niveau de charge, l'unité de commande (14) est configurée pour limiter plus fortement la consommation d'énergie du dispositif d'entraînement (11) à mesure que la différence entre la température de la batterie (21) et le seuil de température augmente.

3. Véhicule comprenant :
une batterie (21) ;
un dispositif d'entraînement (11) qui fonctionne avec l'énergie fournie par la batterie (21) ; et
le système de commande selon les revendications 1 ou 2.
